# EUROPEAN PATENT APPLICATION

(11) **EP 3 772 600 A1**
(43) Date of publication of application: **10.02.2021**
(21) Application number: 20188951.6
(22) Date of filing: 31.07.2020
(51) Int. Cl.: F16D 55/2255

(54) **BRAKE ASSEMBLY HAVING AN ACTUATOR MOUNT**

(30) Priority: 07.08.2019 US 201962883932 P; 14.07.2020 US 202016928734
(71) Applicant: ArvinMeritor Technology, LLC, Troy, MI 48084 (US)
(72) Inventor: Philpott, Daniel Gustavo, Troy, MI 48084 (US)
(74) Representative: Whitfield, Jack Stephen

(57) **Abstract**

A brake assembly and a method of assembling a brake assembly. The brake assembly may have an actuator mount (54) that may have a tapered mounting hole (76). A mounting feature (122) of a brake actuator (32) may be insertable into the mounting hole (76) at an oblique angle with respect to a mounting hole axis (110).

## Description

### CROSS-REFERENCE TO RELATED APPLICATIONS

This application claims the benefit of U.S. provisional application serial no. 62/883,932, filed August 7, 2019, the disclosure of which is hereby incorporated in its entirety by reference herein.

### TECHNICAL FIELD

This document relates to a brake assembly that may have an actuator mount for mounting a brake actuator.

### BACKGROUND

A disc brake is disclosed in U.S. Patent Publication No. 2019/0162259.

### SUMMARY

In at least one embodiment, a brake assembly is provided. The brake assembly may include a brake housing and a brake actuator. The brake housing may define an opening for receiving a brake pad and may have an actuator mount. The actuator mount may be disposed opposite the opening. The actuator mount may include at least one mounting hole that may have a tapered configuration. The mounting hole may be centered about a mounting hole axis. The brake actuator may have a mounting feature. The mounting feature may be insertable into the mounting hole at an oblique angle with respect to the mounting hole axis.

In at least one embodiment, a method of assembling a brake assembly is provided. The method may include providing a brake housing that has an actuator mount. The actuator mount may have a tapered mounting hole that may be centered about a mounting hole axis. A brake actuator may be provided that has a mounting feature that is centered about a mounting feature axis. The mounting feature may be inserted into the tapered mounting hole such that the mounting feature axis is disposed at an oblique angle with respect to the mounting hole axis. The brake actuator may be rotated with respect to the actuator mount to reduce the oblique angle.

### BRIEF DESCRIPTION OF THE DRAWINGS

Figure 1 is a perspective view of an example of a brake assembly with a brake actuator omitted for clarity.
Figure 2 is a perspective view of an actuator mount of the brake assembly.
Figure 3 is a perspective view of a brake actuator.
Figure 4 is a side view of the brake assembly showing the brake actuator being inserted into the actuator mount.
Figure 5 is a side view of the brake assembly showing the brake actuator in a mounted position on the actuator mount.
Figure 6 is a perspective view of the brake actuator in the mounted position on the actuator mount.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

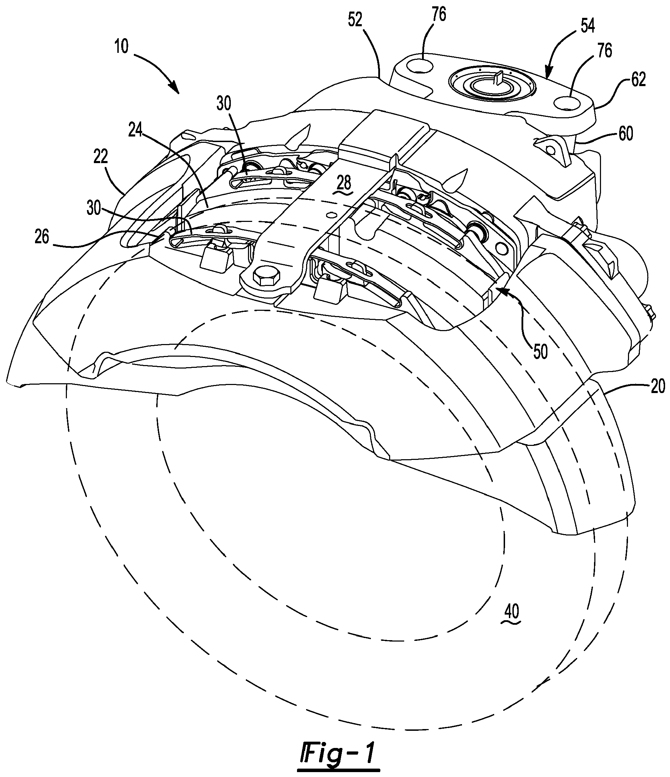

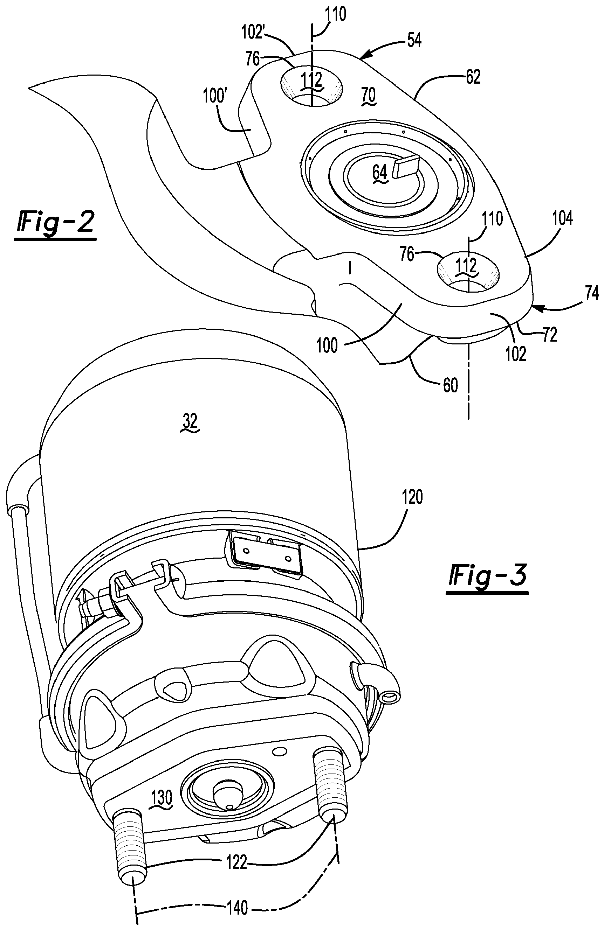

Referring to Figure 1, an example of a brake assembly 10 is shown. The brake assembly 10 may be provided with a vehicle, such as a motor vehicle like a truck, bus, farm equipment, military transport or weaponry vehicle, or cargo loading equipment for land, air, or marine vessels. The brake assembly 10 may be configured as a disc brake or a drum brake. For illustration purposes, the brake assembly 10 will primarily be described as having a disc brake configuration. In at least one configuration, the brake assembly 10 may include a brake carrier 20, a brake housing 22, a first brake pad assembly 24, and a second brake pad assembly 26. The brake assembly may optionally include a retainer bracket 28 and one or more brake pad springs 30 and may include a brake actuator 32, which is best shown in Figures 3-6. In a drum brake configuration, components such as the brake carrier, retainer bracket, brake pad springs, or combinations thereof may be omitted.

The brake carrier 20, if provided, may be configured to be fixedly mounted to the vehicle. For example, the brake carrier 20 may be directly mounted to an axle assembly or a steering knuckle or indirectly mounted, such as with an intermediate component like a torque plate or brake spider. The brake carrier 20 may receive and may support the first brake pad assembly 24 and the second brake pad assembly 26 and may include a rotor opening that may be configured to receive a brake rotor 40. As such, the brake carrier 20 may straddle the brake rotor 40 and help position the first brake pad assembly 24 and the second brake pad assembly 26 on opposite sides of the brake rotor 40 in a disc brake configuration. The brake rotor 40 is shown in phantom in Figure 1 so as not to obstruct components of the brake assembly 10.

The brake housing 22 may receive various components of the brake assembly 10. In addition, the brake housing 22 may facilitate positioning of the first brake pad assembly 24 and the second brake pad assembly 26 with respect to the brake rotor 40 to facilitate braking of the vehicle. In a disc brake configuration, the brake housing 22 may include a housing and a bridge that may cooperate to define an opening 50 that may receive the first brake pad assembly 24, second brake pad assembly 26, brake pad springs 30 (if provided), and a portion of the brake rotor 40. In a disc brake configuration, the brake housing 22 may be moveably disposed on the brake carrier 20. For example, the brake housing 22 may be slidably disposed on a pair of guide pins that may be fixedly disposed on the brake carrier 20. In at least one configuration, the brake housing 22 may include a back side 52 and an actuator mount 54.

The back side 52 that may face away from the opening 50 and the first and second brake pad assemblies 24, 26. The back side 52 may face toward the brake actuator 32.

Referring to Figures 1, 2 and 4, the actuator mount 54 may facilitate mounting of the brake actuator 32 as will be discussed in more detail below. The actuator mount 54 may be integrally formed with the brake housing 22 or may be a separate component that is attached to the brake housing 22. In at least one configuration, the actuator mount 54 may include a stem 60 and a mounting flange 62.

The stem 60 may extend from the back side 52 of the brake housing 22 in a direction that extends away from the first and second brake pad assemblies 24, 26. The stem 60 may be hollow and may receive a linkage 64, such as a portion of an operating shaft that may transmit force from the brake actuator 32 to actuate the first and second brake pad assemblies 24, 26.

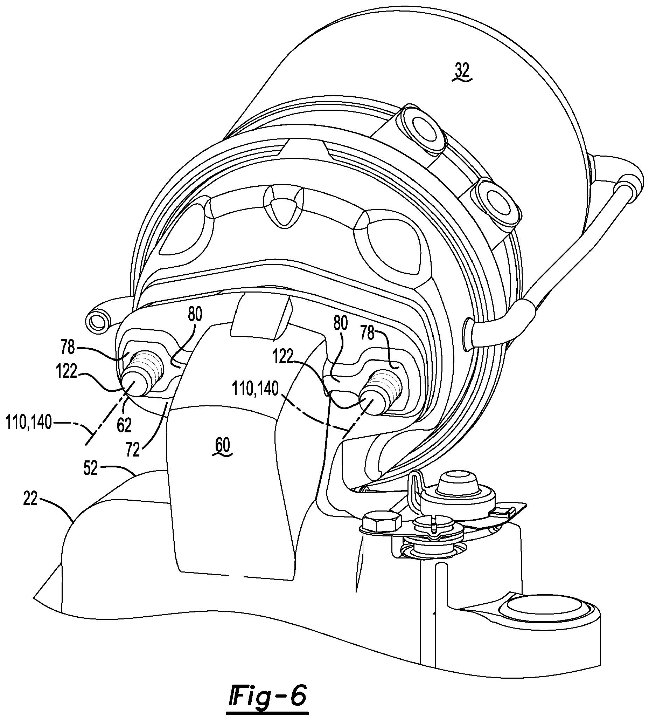

The mounting flange 62 may extend from the stem 60. In addition, the mounting flange 62 may be spaced apart from the back side 52 of the brake housing 22. In at least one configuration and as is best shown with reference to Figure 2, the mounting flange 62 may include a top side 70, a bottom side 72, a perimeter 74, and a mounting hole 76. Optionally, the mounting flange 62 may include a ring 78 and a rib 80, which are best shown in Figure 6.

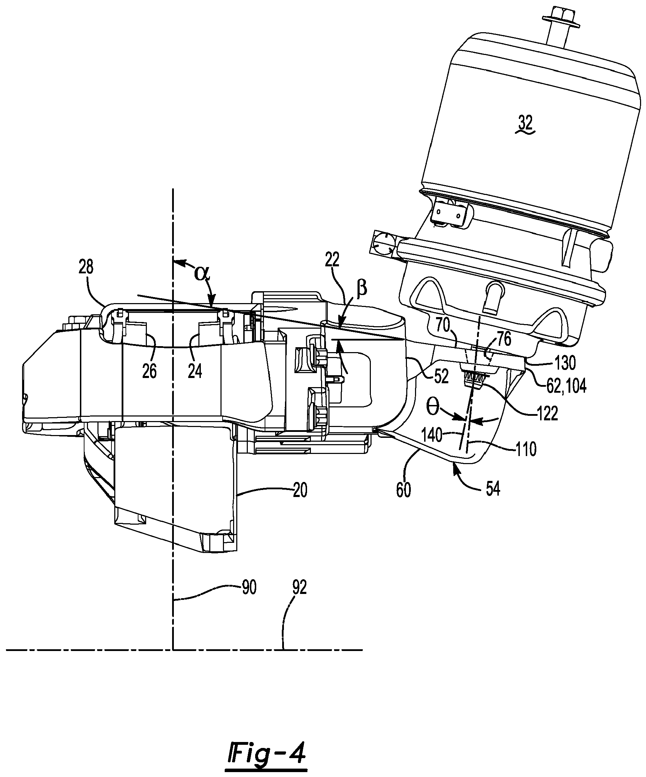

Referring to Figures 2 and 4, the top side 70, which may also be referred to as the mounting side, may face toward the brake actuator 32. The top side 70 may have a planar or substantially planar configuration and may be configured to engage or contact the brake actuator 32. As is best shown in Figure 4, the top side 70 may be disposed at an oblique angle α with respect to a center brake rotor plane 90. The center brake rotor plane 90 may be generally disposed at the center of the opening 50 between the first and second brake pad assemblies 24, 26 and may be disposed perpendicular to a brake rotor axis of rotation 92. The top side 70 may also be disposed at an oblique angle β with respect to the brake rotor axis of rotation 92. The oblique angle α may be an obtuse angle while the oblique angle β may be an acute angle. An opening may be provided proximate the center of the top side 70 that may receive or may provide access to the linkage 64. The opening may also act as a locating feature that may receive a portion of the brake actuator 32 when the brake actuator 32 is in a mounted position.

The bottom side 72, which may also be referred to as an opposing side, may be disposed opposite the top side 70. As such, the bottom side 72 may face away from the brake actuator 32. In at least one configuration, the top side 70 or a portion thereof may be disposed substantially parallel to the bottom side 72.

The perimeter 74 may extend from the top side 70 to the bottom side 72. In at least one configuration, the perimeter 74 may include a first front perimeter side 100, a second front perimeter side 100', a first lateral perimeter side 102, a second lateral perimeter side 102', and a rear perimeter side 104.

The first front perimeter side 100 may extend in an outward direction or in a direction that extends away from a center plane of the actuator mount 54, which may be disposed perpendicular to the center brake rotor plane 90. Moreover, the mounting flange 62 may have mirror symmetry with respect to the center plane. For instance, the first front perimeter side 100 may extend outward from the stem 60 to an end of the first lateral perimeter side 102. The first front perimeter side 100 may face toward and may be spaced apart from the back side 52 of the brake housing 22.

The second front perimeter side 100' may be disposed opposite the first front perimeter side 100. The second front perimeter side 100' may extend in an outward direction from the stem 60 to an end of the second lateral perimeter side 102'. The second front perimeter side 100' may face toward and may be spaced apart from the back side 52 of the brake housing 22.

The first lateral perimeter side 102 may extend in a direction that extends away from the opening 50 and the back side 52 of the brake housing 22. The first lateral perimeter side 102 may extend from the first front perimeter side 100 to a first end of the rear perimeter side 104. The first lateral perimeter side 102 may be spaced apart from the stem 60.

The second lateral perimeter side 102' may have mirror symmetry with the first lateral perimeter side 102. The second lateral perimeter side 102' may extend in a direction that extends away from the opening 50 and the back side 52 of the brake housing 22. The second lateral perimeter side 102' may extend from the second front perimeter side 100' to a second end of the rear perimeter side 104. The second lateral perimeter side 102' may be spaced apart from the stem 60.

The rear perimeter side 104 may face away from the back side 52 of the brake housing 22. The rear perimeter side 104 may extend from an end of the first lateral perimeter side 102 to an end of the second lateral perimeter side 102'. In at least one configuration, the rear perimeter side 104 or a portion thereof may extend along a curve or an arc between the first lateral perimeter side 102 and the second lateral perimeter side 102'. The rear perimeter side 104 may be spaced apart from the stem 60.

At least one mounting hole 76 may be provided with the actuator mount 54. In the configuration shown, two mounting holes are provided 76 that are disposed on opposite sides of the center plane of the actuator mount 54. In at least one configuration, the mounting holes 76 may be spaced apart from the perimeter 74 of the mounting flange 62. A mounting hole 76 may be configured as a through hole that may extend from the top side 70 to the bottom side 72. The mounting hole 76 may extend along and may be centered about a mounting hole axis 110. The mounting hole 76 may have a tapered configuration, such as a tapered conical configuration or frustoconical configuration. More specifically, the mounting hole 76 may be tapered such that the mounting hole 76 is wider or extends further from the mounting hole axis 110 at the top side 70 than at the bottom side 72. As an example, the mounting hole 76 may be defined by a mounting hole surface 112, that may be tapered in an axial direction that may extend from the top side 70 toward the bottom side 72 or vice versa. The mounting hole surface 112 may become progressively narrower in an axial direction that may extend from the top side 70 to the bottom side 72 or vice versa. In the configuration shown in Figure 2, the mounting hole surface 112 has a larger diameter at the top side 70 than at the bottom side 72. The tapered configuration of the mounting hole 76 may allow the brake actuator 32 to be pivoted or rotated with respect to the actuator mount 54 and the mounting flange 62 during installation or removal of the brake actuator 32. Such a configuration may provide various benefits as will be discussed in more detail below. In at least one configuration, the mounting hole surface 112 may be tapered or angled with respect to the mounting hole axis 110 at an angle of between 5° and 45° and more preferably between approximately 15° to 35°.

Referring to Figure 6, a ring 78 may be associated with a mounting hole 76. The ring may extend around the mounting hole 76 and may extend outward from the mounting hole 76 in a direction that extends away from the mounting hole axis 110. The ring 78 may protrude from the bottom side 72 of the mounting flange 62 in a downward direction or a direction that extends away from the top side 70. In at least one configuration, the ring 78 may be spaced apart from the stem 60.

One or more ribs 80 may protrude from the bottom side 72 of the mounting flange 62. In the configuration shown, a rib 80 is provided that extends from the ring 78 to the stem 60. The ring 78 and the rib 80 may help reinforce the mounting flange 62.

Referring to Figure 1, in a disc brake configuration the first brake pad assembly 24 and the second brake pad assembly 26 may be configured to engage opposite sides of the brake rotor 40 to slow the rotation of a vehicle wheel. In a drum brake configuration, the first brake pad assembly 24 and the second brake pad assembly 26 may be configured to engage a brake drum to slow rotation of a vehicle wheel. The first brake pad assembly 24 and the second brake pad assembly 26 may have similar or identical configurations. In at least one configuration, the first brake pad assembly 24 and the second brake pad assembly 26 may each have a backing plate and a friction material.

The backing plate may be a structural member of a brake pad assembly 24, 26. The backing plate may be made of any suitable material, such as a metal or metal alloy.

The friction material may be disposed on the backing plate. The friction material may face toward the brake rotor 40 or the brake drum and may engage the brake rotor 40 or the brake drum during vehicle braking.

In a disc brake configuration, a retainer bracket 28 may be provided may help hold the first brake pad assembly 24 and the second brake pad assembly 26 in the brake carrier 20 and in the opening 50. The retainer bracket 28 may extend across the opening 50. For example, the retainer bracket 28 may have a first end that may hook onto or may be coupled to the brake housing 22 and a second end that may be coupled fastened to a bridge of the brake housing 22. The retainer bracket 28 may contact and exert force upon one or more brake pad springs 30, if provided. Alternatively, retainer bracket 28 may extend across a pad shield that may be disposed in the opening 50 and that may be located between the retainer bracket 28 and the first brake pad assembly 24 and the second brake pad assembly 26.

In a disc brake configuration, a brake pad spring 30 may optionally be provided with the first brake pad assembly 24 and the second brake pad assembly 26. For example, a first brake pad spring 30 may be disposed between the first brake pad assembly 24 and the retainer bracket 28 or between the first brake pad assembly 24 and a pad shield that may be disposed under the retainer bracket 28. As such, the first brake pad spring 30 may extend from the first brake pad assembly 24 to the retainer bracket 28 or the pad shield. A second brake pad spring 30 may be spaced apart from the first brake pad spring 30 and may be disposed between the second brake pad assembly 26 and the retainer bracket 28 or between the retainer bracket 28 and a pad shield. As such, the second brake pad spring 30 may extend from the second brake pad assembly 26 to the retainer bracket 28 or the pad shield. A brake pad spring 30 may exert a biasing force on a corresponding brake pad assembly that may urge the brake pad assembly toward the brake carrier 20 to help position the brake pad assembly.

Referring to Figures 3, 4 and 6, the brake actuator 32 may be configured to actuate the first brake pad assembly 24 and the second brake pad assembly 26. For instance, the brake actuator 32 may actuate the first brake pad assembly 24 and the second brake pad assembly 26 into engagement with the brake rotor 40 in a disc brake configuration, or may actuate the first brake pad assembly 24 and the second brake pad assembly 26 into engagement with a brake drum in a brake drum configuration. The brake actuator 32 may have any suitable configuration. For instance, the brake actuator 32 may be configured as a pneumatic, hydraulic, electrical, or electromechanical actuator. It is contemplated that the brake actuator 32 may be configured as a parking brake actuator that may provide parking brake functionality rather than being the primary actuator for the brake pad assemblies. As is best shown in Figure 3, the brake actuator 32 may include a brake actuator housing 120 and one or more mounting features 122.

The brake actuator housing 120 may receive components of the brake actuator 32. In at least one configuration, the brake actuator housing 120 may have a generally cylindrical shape and may include a lower side 130, which may also be referred to as an actuator abutment surface. The lower side 130 may be planar or substantially planar in one or more configurations. As is best shown in Figure 4, the lower side 130 may face toward the top side 70 of the mounting flange 62 when the brake actuator 32 is installed or being installed.

One or more mounting features 122 may extend from the brake actuator housing 120 and may facilitate mounting of the brake actuator 32 to the actuator mount 54. For example, one or more mounting features 122 may extend from the lower side 130 in a direction that extends away from the brake actuator housing 120. In the configuration shown, two mounting features 122 are shown; however, it is contemplated that a greater or lesser number of mounting features 122 may be provided. The mounting features 122 may have any suitable configuration. For example, the mounting features 122 may be configured as pins or threaded mounting studs and may extend in a substantially linear manner. As such, the mounting features 122 may have a generally cylindrical configuration in one or more embodiments. The mounting features 122 may have a slightly smaller diameter or size than the smallest diameter of a corresponding mounting hole 76 to allow a mounting feature to be inserted into a mounting hole 76 without an interference fit. The mounting feature 122 may extend along and may be centered about a mounting feature axis 140.

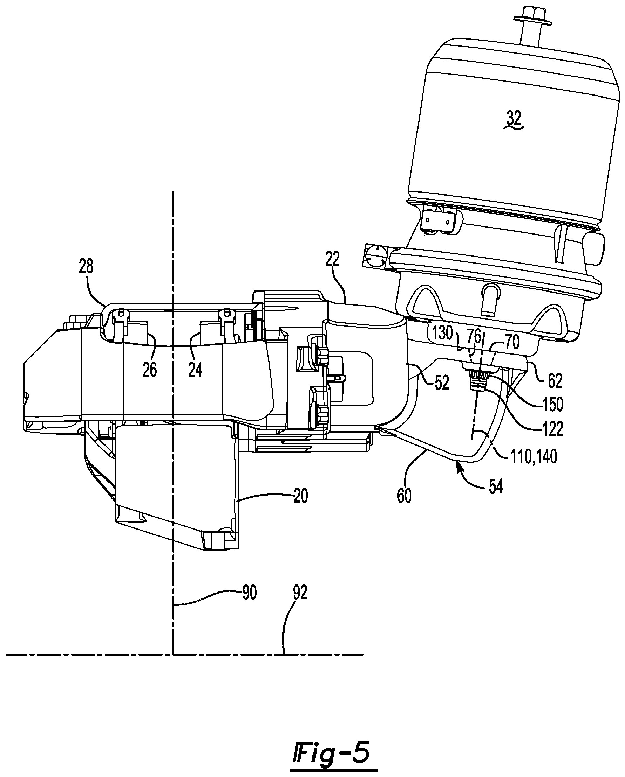

Referring to Figures 4 and 5, an example of how the brake actuator 32 may be assembled to the brake housing 22 is described below.

First and with reference to Figure 4, the mounting feature(s) 122 may be aligned with and inserted into a corresponding mounting hole 76 such that the mounting feature axis 140 is disposed at an oblique angle θ with respect to the mounting hole axis 110. The oblique angle θ may be an acute angle that may be less than or equal to the taper angle of the mounting hole surface 112. The brake actuator 32 may be inserted until the lower side 130 of the brake actuator 32 is disposed proximate or is in contact with the top side 70 of the mounting flange 62 of the actuator mount 54. For instance, the lower side 130 may contact the top side 70 adjacent to the rear perimeter side 104 and may be spaced apart from the top side 70 between the rear perimeter side 104 and the first front perimeter side 100 and the second front perimeter side 100'. In at least one configuration, the lower side 130 of the brake actuator 32 may not overhang at least a portion of the first front perimeter side 100 and the second front perimeter side 100' when the mounting feature 122 is inserted and before the brake actuator 32 is rotated.

Next, the brake actuator 32 may be rotated with respect to the actuator mount 54 to reduce the oblique angle θ as is best understood by comparing Figure 4 and Figure 5. The brake actuator 32 may be rotated toward the opening 50 in the back side 52 of the brake housing 22. The lower side 130 may remain in partial contact with the top side 70 of the mounting flange 62 when the brake actuator 32 is being rotated. The lower side 130 may be disposed substantially parallel to the top side 70 after rotation is complete or after the brake actuator 32 is rotated to its final position or mounted position as shown in Figure 5. The lower side 130 of the brake actuator 32 may overhang the first front perimeter side 100 and the second front perimeter side 100' of the mounting flange 62 when the brake actuator 32 is in the mounted position. Moreover, the lower side 130 may contact the top side 70 between the rear perimeter side 104 and the first front perimeter side 100 and the second front perimeter side 100'.

Finally, the brake actuator 32 may be secured to the actuator mount 54 after rotating the brake actuator 32 to the mounted position. For instance, a retaining feature 150 may be installed to secure the brake actuator 32 to the mounting flange 62 of the actuator mount 54. The retaining feature 150 may be of any suitable type and may have any suitable configuration. For instance, the retaining feature 150 may be a clip, nut, snap ring, or the like. In at least one configuration, the retaining feature 150 may be inserted onto the mounting feature 122 and may be moved (e.g., slid, rotated, etc.) into contact or engagement with the mounting flange 62. For example, a retaining feature 150 may engage or contact the bottom side 72 of the mounting flange 62, the ring 78 of the mounting flange 62, or both to inhibit removal of the mounting feature 122 from the mounting hole 76.

A brake assembly as described above may facilitate the installation and removal of brake actuator, such as when there is tight packaging or limited space around the brake actuator. The mounting flange may allow a brake actuator to be installed or removed by tilting the actuator with respect to the mounting flange and its associated mounting holes rather than by disassembling vehicle components around the brake actuator or by further disassembling the brake assembly, which may require that the vehicle be towed or driven to a servicing center. As such, brake actuator removal and installation time may be reduced, associated costs may be reduced, and vehicle availability may be increased.

The brake assembly described above may provide various benefits as compared to alternative configurations. For example, providing a mounting flange with openings that are configured as elongated slots rather than mounting holes as described above may allow an actuator to be mispositioned along the major (long) axis of the slot, which may impair brake actuator operation or performance. Adding a locator feature to help prevent brake actuator mispositioning may require additional components or a nonstandard brake actuator housing, which may increase cost and complexity. Providing mounting holes with the brake actuator that have a female configuration (rather than a male configuration as described above) and securing the brake actuator with nuts and bolts that extend through the mounting flange holes into the brake actuator may result in nonstandard brake actuator housings that may increase cost and complexity and may lead to tool access difficulties as bolt heads and nuts may be difficult to reach or grasp unlike the configurations described above.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A brake assembly comprising:
a brake housing that defines an opening for receiving a brake pad and that has an actuator mount that is disposed opposite the opening, wherein the actuator mount includes a mounting hole that has a tapered conical configuration and that is centered about a mounting hole axis; and
a brake actuator that has a mounting feature that is insertable into the mounting hole at an oblique angle with respect to the mounting hole axis.

2. The brake assembly of claim 1 wherein the brake housing has a back side that faces away from the opening and the actuator mount includes a stem that extends from the back side and a mounting flange that extends from the stem and that is spaced apart from the back side.

3. The brake assembly of claim 1 wherein the actuator mount has a mounting flange that includes a top side that faces toward the brake actuator and a bottom side that faces away from the brake actuator, wherein the mounting hole extends from the top side to the bottom side and is tapered such that the mounting hole is wider at the top side than at the bottom side, preferably the top side is disposed substantially parallel to the bottom side.

4. The brake assembly of claim 1 wherein the actuator mount has a mounting flange that includes a ring that extends around the mounting hole, extends from the mounting hole, and protrudes from a bottom side of the mounting flange in a direction that extends away from a top side of the mounting flange, the top side facing toward the brake actuator and the bottom side facing away from the brake actuator.

5. The brake assembly of claim 1 wherein the actuator mount has a mounting flange that includes a rib that protrudes from a bottom side of the mounting flange and that extends from a ring that extends around the mounting hole to a stem of the actuator mount that extends from the brake housing to the mounting flange.

6. The brake assembly of claim 5 wherein the ring is spaced apart from the stem.

7. The brake assembly of claim 1 wherein the actuator mount has a stem that extends from the brake housing to a mounting flange that includes a perimeter that extends from a top side of the mounting flange to a bottom side of the mounting flange, wherein the perimeter includes:
a first front perimeter side that extends from the stem to a first lateral perimeter side;
a second front perimeter side that is disposed opposite the first front perimeter side and that extends from the stem to a second lateral perimeter side that is disposed opposite the first lateral perimeter side; and
a rear perimeter side that at least partially extends from an end of the first lateral perimeter side to an end of the second lateral perimeter side; preferably the first lateral perimeter side, the second lateral perimeter side, and the rear perimeter side are spaced apart from the stem.

8. The brake assembly of claim 1 wherein the actuator mount has a mounting flange that has a top side that faces toward the brake actuator and that is disposed at an oblique angle with respect to a center brake rotor plane and at an oblique angle with respect to a brake rotor axis of rotation.

9. A method of assembling a brake assembly comprising:
providing a brake housing that has an actuator mount that has a tapered mounting hole that is centered about a mounting hole axis;
providing a brake actuator that has a mounting feature that is centered about a mounting feature axis;
inserting the mounting feature into the tapered mounting hole such that the mounting feature axis is disposed at an oblique angle with respect to the mounting hole axis; and
rotating the brake actuator with respect to the actuator mount to reduce the oblique angle.

10. The method of claim 9 wherein the actuator mount includes a mounting flange that has a top side that faces toward the brake actuator and a bottom side that faces away from the brake actuator, wherein the tapered mounting hole extends from the top side to the bottom side and is tapered such that the tapered mounting hole is wider at the top side than at the bottom side.

11. The method of claim 9 wherein the brake actuator has a lower side from which the mounting feature extends, wherein inserting the mounting feature includes placing the lower side in contact with a top side of the actuator mount, preferably the lower side contacts the top side of the actuator mount when the brake actuator is rotated or wherein the lower side is disposed substantially parallel to the top side after the brake actuator is rotated.

12. The method of claim 9 wherein the brake housing has a back side and the actuator mount includes a stem that extends from the back side and a mounting flange that extends from the stem and that is spaced apart from the back side, wherein the mounting flange has a top side, a bottom side disposed opposite the top side, and a perimeter that extends from the top side to the bottom side, wherein the perimeter includes:
a first front perimeter side that extends from the stem to a first lateral perimeter side;
a second front perimeter side that is disposed opposite the first front perimeter side and that extends from the stem to a second lateral perimeter side that is disposed opposite the first lateral perimeter side; and
a rear perimeter side that extends from an end of the first lateral perimeter side to an end of the second lateral perimeter side, wherein a lower side of the brake actuator does not overhang the first front perimeter side and the second front perimeter side before rotating the brake actuator, preferably the lower side of the brake actuator overhangs the first front perimeter side and the second front perimeter side after rotating the brake actuator.

13. The method of claim 9 wherein rotating the brake actuator includes rotating the brake actuator toward an opening of the brake housing that is adapted to receive a brake pad.

14. The method of claim 9 further comprising securing the brake actuator to the actuator mount after rotating the brake actuator.

15. The method of claim 9 wherein the actuator mount has a mounting flange that includes a top side that faces toward the brake actuator, a bottom side that faces away from the brake actuator, and a ring that extends around the tapered mounting hole and protrudes from the bottom side in a direction that extends away from the top side, and wherein the brake actuator is secured to the actuator mount with a retaining feature after rotating the brake actuator, wherein the retaining feature is inserted onto the mounting feature and into engagement with the ring to inhibit removal of the mounting feature from the tapered mounting hole.
